# EUROPÄISCHE PATENTSCHRIFT

(11) **EP 0 842 828 B1**
(45) Veröffentlichungstag und Bekanntmachung des Hinweises auf die Patenterteilung: **19.12.2001**
(21) Anmeldenummer: 97118947.7
(22) Anmeldetag: 30.10.1997
(51) Int. Cl.: B60R 21/26, F17C 11/00

(54) **Druckgasspeicher für ein Fahrzeuginsassen-Rückhaltesystem**
Compressed gas storage device for a vehicle occupant restraint system
Réservoir de gaz sous pression pour système de retenue d'un passager de véhicule

(30) Priorität: 08.11.1996 DE 29619437 U
(43) Veröffentlichungstag der Anmeldung: 20.05.1998
(73) Patentinhaber: TRW Occupant Restraint Systems GmbH & Co. KG, 73551 Alfdorf (DE)
(72) Erfinder: Bosio, Allen Charles, 73575 Leinzell (DE)
(74) Vertreter: Sulzbach, Werner, Dipl.-Chem. Dr.

(56) Entgegenhaltungen:
- EP-A- 0 049 936
- FR-A- 2 458 741
- GB-A- 1 231 784
- US-A- 3 316 691
- US-A- 5 031 932

## Beschreibung

Die Erfindung betrifft einen Druckgasspeicher für ein Fahrzeuginsassen-Rückhaltesystem mit einem Speicherbehälter, der eine unter Hochdruck gespeichertes Gas enthaltende Kammer aufweist. Ein solcher Behälter ist z.B. aus dem Dokument US-A- 5, 031, 932 bekannt.

Druckgasspeicher, insbesondere zum Aufblasen eines Gassacks für ein Fahrzeuginsassen-Rückhaltesystem, werden im Kollisionsfall durch Aktivierung einer kleinen pyrotechnischen Ladung geöffnet, so daß das in dem Speicherbehälter gespeicherte Gas austreten und die Entfaltung des Gassacks bewirken kann. Der Gassack muß sich dabei innerhalb einer sehr kurzen Zeitspanne vollständig entfalten, wobei für eine schnelle Füllung des Gassacks ein hoher Gasdruck erforderlich ist, der auch in der Endphase der Entfaltung noch aufrechterhalten werden muß. Ein nur anfänglich hoher Gasdruck ist für den beginnenden Enfaltungsvorgang dagegen eher hinderlich und kann die vollständige Entfaltung des Gassacks nicht gewährleisten.

Die Erfindung schafft einen Druckgasspeicher, in dem bei gleichbleibendem Volumen eine größere Gasmenge gespeichert werden kann, so daß in der Endphase des Entfaltungsvorgangs noch genügend Gas zur vollständigen Entfaltung des Gassacks zur Verfügung steht. Bei einem Druckgasspeicher der eingangs genannten Art wird dies erfindungsgemäß dadurch erreicht, daß auf die Innenwand der Kammer eine Beschichtung aus einem Material mit hoher Oberfläche aufgebracht ist. Vorzugsweise weist das Material eine Oberfläche im Bereich von 200 bis 400 m²/g auf. Besonders bevorzugt ist das Material ein Oxid oder ein Molekularsieb, und insbesondere ein Zeolith.

Weitere Merkmale und Vorteile der Erfindung ergeben sich aus der nachfolgenden Beschreibung einer bevorzugten Ausführungsform und aus den nachfolgenden Zeichnungen, auf die Bezug genommen wird. In den Zeichnungen zeigen:
- Fig. 1 einen erfindungsgemäßen Druckgasspeicher als Teil eines Gassackmoduls im Längsschnitt;
- Fig. 2 ein schematisches Diagramm des Kammerinnendrucks in Abhängigkeit von der Zeit; und
- Fig. 3 ein schematisches Diagramm des Masseflusses aus der Kammer in Abhängigkeit von der Zeit;

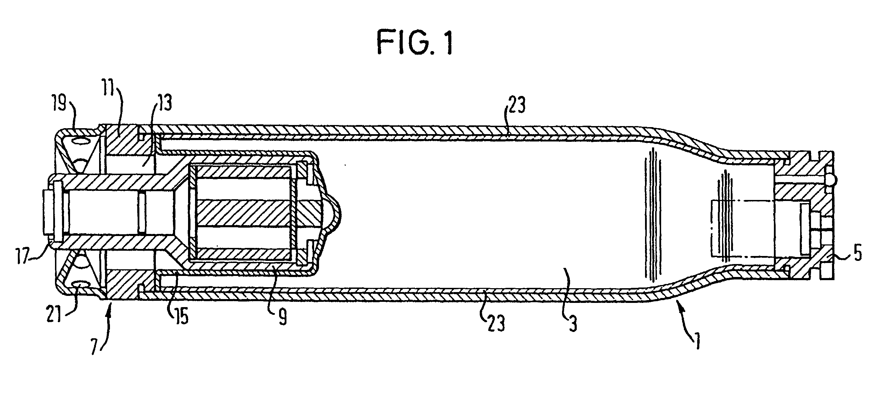

In Fig. 1 ist ein Druckgasspeicher gezeigt, der zum Aufblasen eines nicht gezeigten Gassacks als Teil eines kompletten Gassackmoduls dient. Im Inneren des Speicherbehälters 1 befindet sich eine mit einem Edelgas, wie z.B. Argon oder Helium, oder mit Luft gefüllte Kammer 3. Es können aber auch andere, in der Technik bekannte Gase oder Gasmischungen verwendet werden. Das in der Kammer 3 gespeicherte Gas steht unter einem Druck von über 200 bar. Einem stirnseitig angeordneten Einfüllende 5 liegt ein Ausströmende 7 gegenüber. Vom Ausströmende 7 aus ragt eine Zündeinheit 9 in das Innere der Kammer 3. Die Zündeinheit 9 umfaßt eine pyrotechnische Ladung, die im Kollisionsfall auf ein Signal hin gezündet wird. Die Stirnwand 11 am Ausströmende 7 weist mehrere auf einem Umfang gleichmäßig verteilte Austrittsbohrungen 13 auf, die im nicht betätigten Zustand durch eine sich zur Zündeinheit 9 erstreckende Wandung 15 gegenüber der Kammer 3 geschlossen sind. Auf einen aus der Stirnwand 11 herausragenden Anschlußzapfen 17 der Zündeinheit 9 ist eine Diffusorblende 19 mit zahlreichen Ausströmöffnungen 21 aufgesetzt. Der Speicherbehälter 1 ragt mit dieser Diffusorblende 19 in das Innere eines nicht gezeigten Gassacks und bildet mit ihm ein Gassackmodul.

Auf die Innenwand der Kammer 3 ist eine Beschichtung 23 aus einem Material mit hoher Oberfläche, vorzugsweise einem Zeolith, aufgebracht, wobei die Oberfläche des Materials vorzugsweise in einem Bereich von 200 bis 400 m²/g liegt. Als Material mit hoher Oberfläche können vorteilhaft auch andere Oxide oder Molekularsiebe verwendet werden. Die Oberfläche des Materials kann auch größer als 400 m²/g sein.

Die Funktionsweise des erfindungsgemäßen Druckgasspeichers wird im folgenden erläutert:

Die auf die Innenwand der Kammer 3 aufgebrachte Beschichtung 23 gestattet durch die auf die Gasmoleküle einwirkenden Adhäsionskräfte eine Verdichtung des in die Kammer eingebrachten Gases auf der Oberfläche der Beschichtung bis zum Zustand einer Flüssigkeit. Dadurch kann bei gleichbleibendem Volumen der Kammer 3 eine größere Gasmenge gespeichert werden. Im Kollisionsfall wird die in der Zündeinheit 9 befindliche pyrotechnische Ladung gezündet, so daß zusätzliches Gas in das Innere der Kammer 3 strömt. Der Druck in der Kammer 3 wird dadurch so erhöht, daß die Wandung 15 bricht und Gas durch die Austrittsbohrungen 13 in die Diffusorblende 19 und über die Ausströmöffnungen 21 in das Innere des Gassacks strömt. Die Beschichtung 23 setzt bei dem nun sinkenden Innendruck das an deren Oberfläche adsorbierte Gas frei, so daß in der Endphase des Entfaltungsvorganges dieses zusätzliche Gas zur vollständigen Entfaltung des Gassacks bereitgestellt wird.

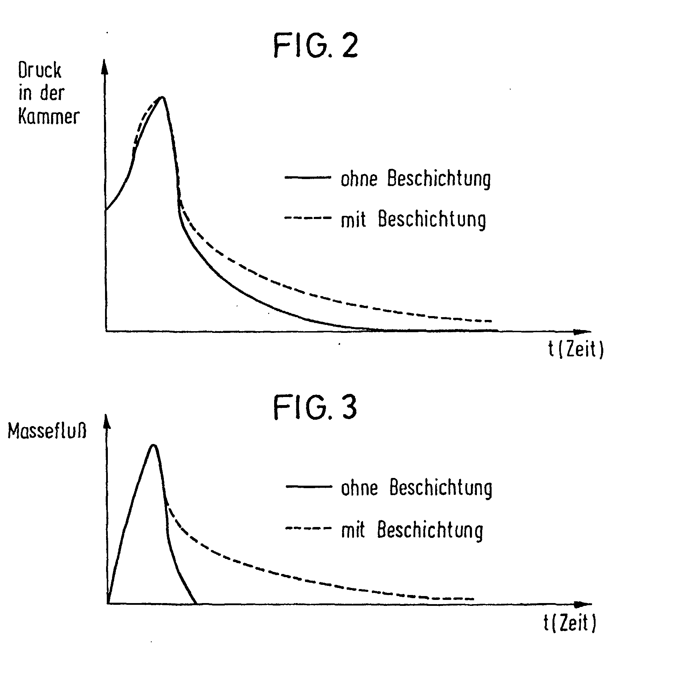

In Fig. 2 ist schematisch die Änderung des Drucks innerhalb der Kammer 3 gegen die Zeit (t) dargestellt. Wie oben beschrieben, steigt der Kammerinnendruck sofort nach Aktivierung der pyrotechnischen Ladung an, um nach dem Brechen der Wandung 15 steil abzufallen. Bei einem Druckgasspeicher ohne Beschichtung ist der Druckabfall steiler als bei dem erfindungsgemäßen Druckgasspeicher, und der Kammerinnendruck nähert sich schneller dem Umgebungsdruck an. In der Endphase der Entfaltung des Gassacks ist daher der Kammerinnendruck in dem erfindungsgemäßen Druckgasspeicher höher als bei den bisher bekannten Druckgasspeichern.

Entsprechend gilt für den zeitlichen Verlauf des Masseflusses aus der Kammer 3, der schematisch in Fig. 3 dargestellt ist. Das Freisetzen der pyrotechnischen Ladung führt zunächst zu einem Anstieg der Gasmenge innerhalb der Kammer 3. Nach dem Brechen der Wandung 15 fließt das Gas in den Gassack und bewirkt dessen Entfaltung. Aufgrund der Adsorption von Gas an der Beschichtung 23 wird jedoch die Freisetzung von Gas zeitlich verzögert, so daß in der Endphase des Entfaltungsvorgangs eine größere Gasmenge als bei den herkömmlichen Druckgasspeichern zur Verfügung steht.

Darüber hinaus tritt bei Verwendung des erfindungsgemäßen Druckgasspeichers eine geringere Beeinflussung des Entfaltungsvorgangs durch die Umgebungstemperatur auf, da die Beschichtung 23 als Akkumulator wirkt und Temperaturschwankungen besser ausgeglichen werden können.

Zur Herstellung des erfindungsgemäßen Druckgasspeichers wird die Kammer 3 mit einer Aufschlämmung des Zeoliths behandelt und bei etwa 500 bis 600 °C getrocknet. Vorzugsweise erfolgt die Beschichtung durch Aufschwemmen des für die Beschichtung zu verwendenden Materials mit hoher Oberfläche unter Zusatz eines Bindemittels und anschließendem Sintern bei hoher Temperatur und, gegebenenfalls, unter einer Inertgasatmosphere. Die Befüllung des Druckgasspeichers mit Gas und/oder der pyrotechnischen Ladung erfolgt nach in der Technik bekannten Verfahren.

Die Erfindung wurde vorstehend anhand eines Druckgasspeichers als Bestandteil eines Gassackmoduls beschrieben. Das Prinzip der Beschichtung mit einem Material hoher Oberfläche läßt sich aber auch bei jedem anderen Druckgasspeicher für Fahrzeuginsassen-Rückhaltesysteme verwenden.

## Patentansprüche

1. Druckgasspeicher für ein Fahrzeuginsassen-Rückhaltesystem mit einem Speicherbehälter (1), der eine unter Hochdruck gespeichertes Gas enthaltende Kammer (3) aufweist, **dadurch gekennzeichnet, daß** auf die Innenwand der Kammer (3) eine aus einem Material mit hoher Oberfläche bestehende Beschichtung (23) aufgebracht ist.

2. Druckgasspeicher nach Anspruch 1, **dadurch gekennzeichnet, daß** das Material ein Oxid oder ein Molekularsieb ist.

3. Druckgasspeicher nach Anspruch 2, **dadurch gekennzeichnet, daß** das Material ein Zeolith ist.

4. Druckgasspeicher nach einem der Ansprüche 1 bis 3, **dadurch gekennzeichnet, daß** das Material eine Oberfläche von etwa 200 bis 400 m²/g aufweist.

## Claims

1. A compressed gas storage means for a vehicle occupant restraining system comprising a storage container (1), which has a chamber (3) containing gas stored under a high pressure, **characterized in that** the internal wall surface of the chamber (3) bears a coating (23) of a material with a high specific surface area.

2. The compressed gas storage means as claimed in claim 1, **characterized in that** the material is an oxide or a molecular sieve.

3. The compressed gas storage means as claimed in claim 2, **characterized in that** the material is a zeolite.

4. The compressed gas storage means as claimed in any one of claims 1 to 3, **characterized in that** the material has a specific surface area of about 200 to 400 m²/g.

## Revendications

1. Réservoir de gaz comprimé pour un système de retenue des occupants d'un véhicule, comprenant une cuve de réservoir (1) présentant une chambre (3) contenant du gaz emmagasiné sous haute pression,
**caractérisé en ce qu'**un revêtement (23) formé d'une matière ayant une surface importante est déposé sur la paroi intérieure de la chambre (3).

2. Réservoir de gaz comprimé selon la revendication 1,
**caractérisé en ce que** la matière est un oxyde ou un tamis moléculaire.

3. Réservoir de gaz comprimé selon la revendication 2,
**caractérisé en ce que** la matière est une zéolite.

4. Réservoir de gaz comprimé selon l'une des revendications 1 à 3, **caractérisé en ce que** la matière présente une surface de l'ordre de 200 à 400 m²/g.
